# EUROPEAN PATENT APPLICATION

(11) **EP 4 657 542 A1**
(43) Date of publication of application: **03.12.2025**
(21) Application number: 24872867.7
(22) Date of filing: 24.09.2024
(51) Int. Cl.: H01M 4/131, H01M 4/62, H01M 10/0562, H01M 4/525, H01M 4/505, H01M 10/052, H01M 4/02

(54) **CATHODE FOR ALL-SOLID-STATE BATTERY, AND ALL-SOLID-STATE BATTERY COMPRISING SAME**

(30) Priority: 27.09.2023 KR 20230130763; 06.09.2024 KR 20240121373
(71) Applicant: LG Energy Solution, Ltd., Seoul 07335 (KR)
(72) Inventor: CHOI, Seokin, Daejeon 34122 (KR); KWON, Hyejin, Daejeon 34122 (KR); KIM, Sohee, Daejeon 34122 (KR); LEE, Choonghyeon, Daejeon 34122 (KR); KIM, Myeongsoo, Daejeon 34122 (KR); OH, Kyungbae, Daejeon 34122 (KR); KANG, Sora, Daejeon 34122 (KR)
(74) Representative: Goddar, Heinz J.
(86) International application number: PCT/KR2024/014397
(87) International publication number: WO 2025/071159

(57) **Abstract**

The present invention relates to a positive electrode for an all-solid-state battery that can improve the performance of the battery by physically optimizing the properties of the positive electrode that directly affect the lifetime and capacity expression of the battery, and an all-solid-state battery comprising same. The positive electrode for an all-solid-state battery comprises a positive electrode active material, a solid electrolyte and a binder, wherein the content of the positive electrode active material exceeds 70% by weight.

## Description

### [Technical Field]

This application claims the benefit of priority to Korean Patent Application No. 10-2023-0130763, filed September 27, 2023, and Korean Patent Application No. 10-2024-0121373, filed September 6, 2024, the disclosures of which are incorporated herein by reference in their entirety.

The present invention relates to a positive electrode for an all-solid-state battery having a certain range of tensile strength while containing the components in predetermined proportions and an all-solid-state battery comprising same, more particularly, to a positive electrode for an all-solid-state battery that can improve the performance of the battery by physically optimizing the properties of the positive electrode that directly affect the lifetime and capacity expression of the battery, and an all-solid-state battery comprising same.

### [Related Art]

A variety of batteries are being researched to overcome the limitations of the current widely commercialized lithium secondary batteries in terms of capacity, safety, output, large-scale applications, and microminiaturization. Representative examples include metal-air batteries, which have a very large theoretical capacity compared to lithium-ion batteries in terms of capacity; in terms of safety, all-solid-state batteries, which have no risk of explosion, unlike lithium-ion batteries; in terms of output, super capacitors; in terms of large-scale applications, sodium-sulfur batteries (NaS batteries) or redox flow batteries (RFBs); and in terms of microminiaturization, thin film batteries. Continuous research is being conducted in academia and industry on these technologies.

Among them, an all-solid-state battery is a battery that replaces the electrolyte used in a lithium secondary battery from a liquid to a solid, and accordingly, since no flammable solvent is used in the battery, there is no possibility of ignition or explosion due to the decomposition reactions of the electrolyte as seen in conventional batteries, which greatly improves safety. All-solid-state batteries also have the advantage of being able to use Li metal or Li alloys as negative electrode materials, which can dramatically improve the energy density relative to the mass and volume of the battery.

On the other hand, solid electrolytes in all-solid-state batteries can be broadly categorized into organic (polymer-based) solid electrolytes and inorganic solid electrolytes, of which inorganic solid electrolytes can be divided into sulfide-based and oxide-based. The most technologically advanced solid electrolytes are currently sulfide-based solid electrolytes, which have been developed to the point where their ionic conductivity reaches that of organic electrolytes. As such, sulfide-based solid electrolytes have high ionic conductivity, with 10⁻³ to 10⁻² S/cm, among solid electrolytes, and they also have the advantage of being ductile, which allows them to contact interfaces well and improve resistance.

In sulfide-based all-solid-state batteries, including these sulfide-based solid electrolytes, the characteristics of the positive electrode, in particular, have a direct impact on the lifetime and capacity of the battery. Therefore, structural studies are being conducted to reduce resistance in the positive electrode and, in particular, to improve positive electrode properties such as ionic conductivity and electrical conductivity. However, this is still far from satisfactory, and a more fundamental solution is needed to improve the performance of the battery by optimizing the properties of the positive electrode.

### [Detailed Description of the Invention]

### [Technical Problem]

Accordingly, it is an object of the present invention to provide a positive electrode for an all-solid-state battery that can improve the performance of the battery by physically optimizing the properties of the positive electrode that directly affect the lifetime and capacity expression of the battery, and an all-solid-state battery comprising same.

### [Technical Solution]

To achieve the above objectives, the present invention provides a positive electrode for an all-solid-state battery comprising a positive electrode active material, a solid electrolyte, and a binder, wherein the content of the positive electrode active material exceeds 70% by weight.

The present invention also provides an all-solid-state battery comprising the positive electrode for an all-solid-state battery; a negative electrode; and an electrolyte.

### [Advantageous Effects]

A positive electrode for an all-solid-state battery and an all-solid-state battery comprising same according to the present invention have the advantage of improving the performance of the battery by physically optimizing the properties of the positive electrode that directly affect the lifetime and capacity expression of the battery.

### [Brief Description of Drawing]

FIG. 1 is a stress-strain curve to determine the tensile strength of positive electrodes fabricated in examples and comparative example of the present invention.
FIG. 2 is a graph illustrating the lifetime characteristics and capacity retention of batteries according to examples and comparative example of the present invention.

### [Best Mode]

The present invention will now be described in detail.

The positive electrode for an all-solid-state battery according to the present invention comprises a positive electrode active material, a solid electrolyte and a binder, wherein the content of the positive electrode active material exceeds 70% by weight.

An all-solid-state battery is a battery that replaces the electrolyte used in a lithium secondary battery from a liquid to a solid, and since no flammable solvent is used in the battery, there is no possibility of ignition or explosion due to the decomposition reactions of the electrolyte as seen in conventional batteries, which greatly improves safety. All-solid-state batteries also have the advantage of being able to use Li metal or Li alloys as negative electrode materials, which can dramatically improve the energy density relative to the mass and volume of the battery. The most technologically advanced solid electrolytes are currently sulfide-based solid electrolytes, which have been developed to the point where their ionic conductivity reaches that of organic electrolytes. Sulfide-based solid electrolytes also have the advantage of being ductile, which allows them to contact the interface well, which is favorable for improving resistance.

In sulfide-based all-solid-state batteries, including these sulfide-based solid electrolytes, the characteristics of the positive electrode, in particular, have a direct impact on the lifetime and capacity of the battery. Therefore, structural studies are being conducted to reduce resistance in the positive electrode and, in particular, to improve positive electrode properties such as ionic conductivity and electrical conductivity. However, it still has not reached a satisfactory level, and accordingly, the applicant of the present invention has invented a method for improving the performance of the battery by physically optimizing the properties of the positive electrode that directly affect the lifetime and capacity expression of the battery.

Hereinafter, the present invention will be described in more detail.

First, the positive electrode active material included in the positive electrode for an all-solid-state battery may be a compound capable of reversibly adsorbing and releasing lithium ions, and capable of inserting/removing of lithium. Examples of compounds in which lithium can be inserted/removed include LiₐA_{1-b}B'_{b}D'₂ (wherein 0.90≤a≤1.8, and 0≤b≤0.5); LiₐE₁-_{b}B'_{b}O_{2-c}D'_{c} (wherein 0.90≤a≤1.8, 0≤b≤0.5, and 0≤c≤0.05); LiE_{2-b}B'_{b}O_{4-c}D'_{c} (wherein 0≤b≤0.5, and 0≤c≤0.05); LiₐNi_{1-b-c}Co_{b}B'_{c}D'_{α} (wherein 0.90≤a≤1.8, 0≤b≤0.5, 0≤c≤0.05, and 0<α≤2); LiₐNi_{1-b-c}Co_{b}B'_{c}O_{2-α}F'_{α} (wherein 0.90≤a≤1.8, 0≤b≤0.5, 0≤c≤0.05, and 0<α<2); LiₐNi_{1-b-c}Mn_{b}B'_{c}D'_{α} (wherein 0.90≤a≤1.8, 0≤b≤0.5, 0≤c≤0.05, and 0<α≤2); LiₐNi_{1-b-c}Mn_{b}B'_{c}O_{2-α}F'_{α} (wherein 0.90≤a≤1.8, 0≤b≤0.5, 0≤c≤0.05, and 0<α<2); LiₐNi_{b}E_{c}G_{d}O₂ (wherein 0.90≤a≤1.8, 0≤b≤0.9, 0≤c≤0.5, and 0.001≤d≤ 0.1); LiₐNi_{b}Co_{c}Mn_{d}GₑO₂ (wherein 0.90≤a≤1.8, 0≤b≤0.9, 0≤c≤0.5, 0≤d≤0.5, and 0.001≤e≤0.1); LiₐNiG_{b}O₂ (wherein 0.90≤a≤1.8, and 0.001≤b≤0.1); LiₐCoG_{b}O₂ (wherein 0.90≤a≤1.8, and 0.001≤b≤0.1); LiₐMnG_{b}O₂ (wherein 0.90≤a≤1.8, and 0.001≤b≤0.1); LiₐMn₂G_{b}O₄ (wherein 0.90≤a≤1.8, and 0.001≤b≤0.1); QO₂; QS₂; LiQS₂; V₂O₅; LiV₂O₅; LiI'O₂; LiNiVO₄; Li_{(3-f)}J₂(PO₄)₃ (wherein 0≤f≤2); Li_{(3-f)}Fe₂(PO₄)₃ (wherein 0≤f≤2); LiFePO₄.

In the above formulae, A is Ni, Co, Mn, or a combination thereof; B' is Al, Ni, Co, Mn, Cr, Fe, Mg, Sr, V, a rare earth element, or a combination thereof; D' is O, F, S, P, or a combination thereof; E is Co, Mn, or a combination thereof; F' is F, S, P, or any combination thereof; G is Al, Cr, Mn, Fe, Mg, La, Ce, Sr, V, or any combination thereof; Q is Ti, Mo, Mn, or any combination thereof; I is Cr, V, Fe, Sc, Y, or any combination thereof; and J is V, Cr, Mn, Co, Ni, Cu, or any combination thereof.

Specific examples of such positive electrode active materials may include lithium cobalt oxide (LCO), lithium nickel oxide, lithium nickel cobaltate, lithium nickel cobalt aluminum oxide (NCA), lithium nickel cobalt manganate (NCM), lithium salts such as lithium manganate and lithium iron phosphate, and lithium sulfide. The positive electrode active material may comprise only one selected from these compounds, or may comprise two or more therefrom.

The positive electrode active material may comprise a lithium salt of a transition metal oxide having a layered rock salt structure among the lithium salts described above. Here, "layered rock salt structure" is a structure in which oxygen atom layers and metal atom layers are arranged alternately and regularly in the direction of a cubic rock salt structure, resulting in each atom layer forming a two-dimensional plane. Also, "cubic rock salt structure" means a sodium chloride structure, which is one type of crystal structure. For example, "cubic rock salt structure" refers to a structure in which the face-centered cubic lattices are each formed by cations and anions are offset from each other by 1/2 of the edges of the unit lattice.

Lithium salts of transition metal oxides with such layered rock salt structures may include, for example, a ternary lithium transition metal oxide such as LiNiₓCo_{y}Al_{z}O₂(NCA) or LiNiₓCo_{y}Mn_{z}O₂(NCM) (wherein 0 < x < 1, 0 < y < 1, 0 < z < 1, and x + y + z = 1). The positive electrode active material layer may include a lithium salt of a ternary transition metal oxide having such a layered rock salt structure as the positive electrode active material to improve the energy density and thermal stability of the battery.

Furthermore, the above-mentioned compound having a coating layer on the surface can also be used, and a mixture of the above-mentioned compound and compound having a coating layer can also be used. The coating layer may comprise a coating element compound such as an oxide, hydroxide, oxyhydroxide, oxycarbonate, or hydroxycarbonate of a coating element. The compounds that make up these coating layers can be amorphous or crystalline. The coating elements included in the coating layer may include, for example, Mg, Al, Co, K, Na, Ca, Si, Ti, V, Sn, Ge, Ga, B, As, Zr, or mixtures thereof, and specific examples of the coating layer may include Li₂O-ZrO₂ and the like. The coating layer formation process can be carried out using any coating method (e.g., spray coating, dipping, etc.) provided that the compound can be coated with these elements in a way that does not adversely affect the properties of the positive electrode active material, which is well understood by those skilled in the art and will not be described in detail.

The shape of the positive electrode active material can have, for example, a particle shape such as spherical, ellipsoidal, spherical, etc. In addition, the particle size of the positive electrode active material is not particularly limited and can be in the range applicable to the positive electrode active material of conventional all-solid-state lithium-ion secondary batteries. However, when the particle size (D50) of the positive electrode active material is 1 to 10 µm, preferably 3 to 8 µm, more preferably 4 to 6 µm, the effect according to the present invention can be maximized.

The content of the positive electrode active material is one of the key features of the present invention, being more than 70% by weight, preferably more than 70% by weight but not more than 95% by weight, more preferably 73 to 89% by weight, most preferably 78 to 88% by weight, with respect to the total weight of the positive electrode. If the content of the positive electrode active material is 70% by weight or less, the energy density of the battery itself, which is one of the important factors in evaluating the performance of the battery, is greatly reduced.

In particular, all-solid-state batteries have the advantage of high energy density compared to conventional lithium-ion batteries, and the reduction in positive electrode active material hinders energy density, significantly lowering the competitiveness of all-solid-state batteries against lithium-ion batteries. In addition, since the solid electrolyte is the most expensive of the materials in the positive electrode, the content of the positive electrode active material must be increased as mentioned above, to ensure competitiveness in terms of price compared to lithium-ion batteries. Furthermore, as the content of the positive electrode active material decreases, the optimum tensile strength of the electrode itself changes, and, therefore, in a composition with 70% by weight or less of the positive electrode active material, the cell may not exhibit the performance results of the present invention, even if the tensile strength of the positive electrode is adjusted according to the invention.

The solid electrolyte included in the positive electrode for an all-solid-phase battery of the present invention may comprise at least one selected from a sulfide-based solid electrolyte, a polymer-based solid electrolyte, and an oxide-based solid electrolyte, and may preferably comprise only a sulfide-based solid electrolyte. Also, the sulfide-based solid electrolyte is a liquid phase in which a solid phase sulfide-based electrolyte is melted and impregnated between particles such as positive electrode active material particles and positive electrode binder particles, and then cured by drying, so that it can be coated on the surface of the particles and also located between the particles. In other words, the solid electrolyte included in the positive electrode may comprise a solid electrolyte coated on the surface of the particles; and a solid electrolyte impregnated between the particles.

The sulfide-based solid electrolyte may comprise a lithium salt, wherein the lithium salt is an ionizable lithium salt, expressed as Li⁺X⁻. The anions of these lithium salts are not specifically limited to, but may include, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc.

Furthermore, the sulfide-based solid electrolyte may comprise a Li-P-S-based glass or a Li-P-S-based glass-ceramic, which contains sulfur (S) and has an ionic conductivity of a metal belonging to Group 1 or 2 of the periodic table. Non-limiting examples of such sulfide-based solid electrolytes may include Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and the like, and the sulfide-based solid electrolyte may comprise one or more selected therefrom.

The content of solid electrolyte contained in the positive electrode is 0.1 to 29% by weight, preferably 5 to 19% by weight, more preferably 7 to 20% by weight, relative to the total weight of the positive electrode. If the content of solid electrolyte in the positive electrode is less than 0.1% by weight, the lithium ion conduction in the positive electrode may not be smooth, which may cause problems in driving the cell. Furthermore, if the content of solid electrolyte in the positive electrode exceeds 29% by weight, the capacity of the cell is reduced due to the relatively reduced loading of the positive electrode active material, which results in a reduction of the energy density, which is one of the important performance characteristics of such cell.

Next, the positive electrode binder included in the positive electrode for an all-solid-state battery of the present invention is mixed with the aforementioned positive electrode active material and the solid electrolyte included in the positive electrode to aid in the growth of particles by binding the respective components. In particular, sulfide-based solid electrolytes are highly sensitive to moisture, producing hydrogen sulfide (H₂S) gas upon contact with moisture, so it is advisable to exclude as much moisture as possible from the initial addition.

The positive electrode binder may be an organic binder, wherein the organic binder refers to a binder that is soluble or dispersible in an organic solvent, in particular N-methylpyrrolidone (NMP), as distinguished from an aqueous binder, wherein water is used as a solvent or a dispersing medium. For example, the binder may be selected from the group consisting of, but not limited to, polyvinylidene fluoride (PVDF), vinylidene fluoride-hexafluoropropylene copolymer (PVDF-co-HFP), polyvinyl alcohol, starch, hydroxypropyl cellulose, regenerated cellulose, polyvinylpyrrolidone, polyimide, polyamideimide, polyethylene, polypropylene, ethylene-propylene-diene monomer (EPDM), sulfonated EPDM, styrene-butylene rubber, and fluororubber.

The content of the positive electrode binder is 0.1 to 5% by weight, preferably 0.2 to 2% by weight, more preferably 0.3 to 1% by weight, relative to the total weight of the positive electrode. If the content of the positive electrode binder is less than 0.1% by weight, it may be difficult to maintain the electrode structure due to the lack of binder, which may cause difficulties in manufacturing the electrode itself. Furthermore, if the content of the positive electrode binder exceeds 5% by weight, there is a concern that the binder acts as a resistive component within the electrode, resulting in increased cell resistance, which reduces the output and lifetime characteristics of the cell.

The positive electrode for an all-solid-state battery according to the present invention may further comprise at least one following additives, as desired: a conductive material, a filler, a dispersant, and an ionic conductivity aid. The conductive material may be, for example, carbon nanotube, graphite, carbon black, carbon fiber, or metal powder. As the filler, dispersant, and ionic conductivity aid, any of the known materials typically used for electrodes of all-solid-state lithium-ion secondary batteries can be used. Also, the positive electrode active material may comprise the above-mentioned positive electrode active material, binder, and conductive material in granular form.

In one aspect, the conductive material may comprise at least one of linear particles and dot-shaped particles. In addition, by using both linear and dot-shaped conductive materials together, it is possible to leverage the respective advantages of each, thereby facilitating the manufacturing of electrodes and batteries while also improving the battery performance. The linear conductive material may be a carbon nanofiber (CNF) consisting of linear particles or a carbon nanotube (CNT) consisting of linear particles, and more preferably, a single-walled carbon nano tube (SWCNT) consisting of linear particles, among the carbon nanotubes. This has the advantage of improving electrical conductivity and improving the migration of the conductive material. Carbon black (CB) can be exemplified as a dot-shaped conductive material, and any other material that is similar or identical to the shape and properties of carbon black particles can be applied as a dot-shaped conductive material. The use of these dot-shaped conductive materials allows for the formation of a uniform surface, which in turn improves adhesion to the solid electrolyte in contact with the electrode. In other words, the voids in the linear material can be filled with a dot-shaped conductive material to flatten the surface of the positive electrode. Multi-walled carbon nanotubes (MWCNTs), activated carbons, and mesoporous carbons are also applicable as the conductive materials.

If the conductive material is also included in the positive electrode of the present invention, the content of the conductive material is 0.001 to 5% by weight, preferably 0.05 to 2% by weight, more preferably 0.1 to 1% by weight, with respect to the total weight of the positive electrode. If the content of the conductive material is less than 0.001% by weight, the benefits of using the conductive material may be negligible. In addition, if the content of the conductive material exceeds 5% by weight, the side reactions at the surface with the electrolyte are greatly increased, which can cause major problems in the lifetime performance of the cell.

The positive electrode for an all-solid-state battery of the present invention is characterized in that it contains the components in the positive electrode in a predetermined ratio, while having a certain range of tensile strength, as described above. Further, with this composition, the performance of the battery (specifically, ionic conductivity and electrical conductivity) can be improved by physically optimizing the properties of the positive electrode, which directly affect the lifetime and capacity expression of the battery.

The tensile strength of the positive electrode for an all-solid-state battery according to the present invention is 0.01 to 1.0 Mpa, preferably 0.03 to 0.7 Mpa, more preferably 0.1 to 0.5 MPa. If the tensile strength of the positive electrode is not within the above range, there is no synergistic effect with the benefits of the composition and composition ratio of the components in the positive electrode. On the contrary, even if the tensile strength of the positive electrode is within the above range, if the composition and composition ratio of the components in the positive electrode are not within the scope of the present invention, similarly, synergistic effects will not occur and it will be difficult to improve the performance of the electrode and the battery.

More specifically, if the tensile strength of the positive electrode is less than 0.01 Mpa, the strength of the electrode will be greatly reduced, which may cause problems during electrode fabrication and cell assembly. In addition, if the tensile strength of the positive electrode exceeds 1.0 Mpa, the resistance of the cell will increase significantly, which may cause problems with the life and output characteristics of the cell. The tensile strength of the positive electrode in the present invention is lower than usual, and higher tensile strength means that the binder covers relatively more of the surfaces of the active material and solid electrolyte in the positive electrode. In other words, as the tensile strength increases, the resistance caused by the binder increases, and the performance of the battery decreases.

Next, a method for manufacturing a positive electrode for an all-solid-state battery according to the present invention will be described. The method of manufacturing a positive electrode for an all-solid-state battery may include manufacturing a positive electrode active material, a solid electrolyte, and a binder in the form of granules, and applying them to a positive electrode metal current collector, and then rolling them to produce a positive electrode in the form of a sheet. In addition to the above positive electrode active material, solid electrolyte, and binder, a conductive material may be used. However, this is only an example and a positive electrode can be prepared by various methods known in the art.

Next, an all-solid-state battery according to the present invention will be described. The all-solid-state battery comprises a positive electrode for an all-solid-state battery as described above, a negative electrode, and an electrolyte. Preferably, the electrolyte is preferably a solid electrolyte, wherein the solid electrolyte is located as a layered film between the positive electrode and the negative electrode, and is physically separated from the solid electrolyte contained in the positive electrode. The solid electrolyte between the positive electrode and negative electrode can act as a separator in a typical lithium secondary battery (i.e., electrically insulate the negative electrode and positive electrode while allowing lithium ions to pass through). Furthermore, the solid electrolyte is preferably a sulfide-based solid electrolyte, and thus, the all-solid-state battery is preferably a sulfide-based all-solid-state battery.

As for the sulfide-based solid electrolyte, it may be the same as the sulfide-based solid electrolyte described above for the positive electrode, or it may be different from the solid electrolyte included in the positive electrode and the solid electrolyte located between the positive electrode and the negative electrode. On the other hand, the all-solid-state battery can be utilized as a semi-solid-state battery by including a liquid electrolyte as needed, in which case a separate polymer separator may be required.

The negative electrode may include any negative electrode active material available in conventional lithium-ion secondary batteries. For example, the negative electrode active material may include various negative electrodes used in the all-solid-state battery field, for example, at least one selected from the group consisting of carbon, such as anthracite carbon, graphitized carbon, and the like; metal complex oxide, such as LiₓFe₂O₃ (wherein 0≤x≤1), LiₓWO₂ (wherein 0≤x≤1), SnₓMe₁₋ₓMe'_{y}O_{z} (wherein Me is Mn, Fe, Pb, or Ge; and Me' is Al, B, P, Si, elements of Group 1, 2 or 3 of the periodic table, or halogen; 0<x≤1; 1≤y≤3; and 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, etc.; conductive polymers such as polyacetylene; Li-Co-Ni based materials; titanium oxides; and lithium titanium oxides.

On the other hand, the negative electrode may not comprise any lithium metal other than the lithium metal formed upon charging (i.e., corresponding to an anodeless all-solid-state battery).

That is, lithium may not be contained in the negative electrode current collector, in the negative electrode active material layer, or between the negative electrode active material layer and the solid electrolyte layer in the initial state or in the state after full discharge.

For example, when an all-solid-state battery containing the negative electrode is overcharged, the negative electrode active material contained in the negative electrode active material layer and the lithium ions migrated from the positive electrode may form an alloy or compound, resulting in the formation (precipitation) of a metal layer on the negative electrode which majorly consists of lithium. The metal layer may be formed by precipitation between the negative electrode current collector and the negative electrode active material layer, within the negative electrode active material layer, or both. If the metal layer is located between the negative electrode current collector and the negative electrode active material layer, the metal layer may be formed closer to the negative electrode current collector layer than to the negative electrode active material layer.

In an anodeless all-solid-state battery according to one example of the present invention, the negative electrode active material layer may include as a negative electrode active material at least one lithium-philic material selected from the group consisting of silver (Ag), gold (Au), platinum (Pt), zinc (Zn), silicon (Si), magnesium (Mg), copper oxide (CuO), zinc oxide (ZnO), cobalt oxide (CoO), manganese monoxide (MnO), silicon dioxide (SiO₂), titanium dioxide (TiO₂), alumina (Al₂O₃), zinc peroxide (ZnO₂), and lithium fluoride (LiF). However, the material is not limited thereto, and any lithium-philic material with similar properties or characteristics may be applied without special restriction.

Thus, the metal layer formed upon overcharge may comprise a Li (lithium-philic material) alloy comprising a γ1 phase, a βLi phase, or a phase of a combination thereof, wherein the lithium-philic material is employed in the lithium. Therefore, during discharge, only Li dissolves from the Li (lithium-philic material) alloy that constitutes the metal layer, while the remaining lithium-philic material suppresses the formation of voids. In this case, the content of the lithium-philic material in the precipitated Li-lithium-philic solid solution may be 60% by weight or less. In this range, the degradation of the average discharge potential due to the influence of lithium-philic material can be effectively suppressed. On the other hand, if the content of the lithium-philic material in the precipitated Li-lithium-philic solid solution is too low, the amount of lithium-philic material remaining at the time of discharge will be small, and it may be difficult to sufficiently suppress the development of voids. For this reason, the content of the content of the lithium-philic material in the precipitated Li-lithium-philic solid solution may be 20% by weight and more, for example, 40% by weight and more.

In one example of the present invention, the lithium-philic material is not necessarily uniformly present in the negative electrode active material layer, and may be ubiquitous on the negative electrode current collector side in the negative electrode active material layer. In this case, a Li (lithium-philic) alloy can be formed as a metallic layer by reacting with the lithium-philic ubiquitous layer in the negative electrode active material layer where the lithium ions reach near the negative electrode current collector.

Furthermore, the lithium-philic material included in the negative electrode active material layer in its initial state without charge and discharge can be particulate or membrane phase. When the lithium-philic material is present in a particulate phase, the average particle size (d50, diameter length, or average diameter) of the lithium-philic material may be, but is not limited to, 20 nm to 1 µm.

The negative electrode active material layer may also include carbon material as the negative electrode active material, in addition to the lithium-philic material. As the carbon material included in the negative electrode active material layer, amorphous carbon may preferably be used. Specific examples of the amorphous carbon may include amorphous carbon black (amorphous acetylene black, amorphous furnace black, amorphous ketjen black), amorphous activated carbon, amorphous graphene, and combinations thereof. However, the interface of the negative electrode active material layer with the solid electrolyte layer can be further flattened by placing carbon material with a relatively small particle size on the interface side. Based on 100% by weight of the total negative electrode active material included in the negative electrode active material layer, the negative electrode active material other than the lithium-philic material may be comprised in an amount of 50% by weight and more, for example, 70% by weight and more. The content of the negative electrode active material other than the lithium-philic material may be measured in the same way as the content of the lithium-philic material is measured.

On the other hand, the negative electrode current collector may be located at the outermost edge in the stacking direction, facing the opposite side of the negative electrode active material layer that is not in contact with the solid electrolyte layer. However, if the battery includes a bicell or higher structure, it may be positioned somewhere other than the outermost edge in the stacking direction.

The negative electrode current collector may be a plate or foil. The negative electrode current collector may comprise a material that does not react with lithium, that is, does not form any of the alloys and compounds with lithium. The materials constituting the negative electrode current collector may include, for example, copper, aluminum, stainless steel, titanium, iron, cobalt, and nickel. The negative electrode current collector may be composed of one of these metals, or may be composed of an alloy of two or more metals or clad material.

In one example, an anodeless all-solid-state battery may have an initial charge capacity of the positive electrode active material layer that is excessive relative to the initial charge capacity of the negative electrode active material layer. The anodeless all-solid-state battery according to one example can be charged beyond the initial charge capacity of the negative electrode active material layer (i.e., overcharged). In the early stages of charging, lithium can be adsorbed to the negative electrode active material layer. In other words, the negative electrode active material can form an alloy or compound with the lithium ions that have migrated from the positive electrode. When charging is performed beyond the initial charging capacity of the negative electrode active material layer, lithium may precipitate from the back side of the negative electrode active material layer, i.e., between the negative electrode current collector and the negative electrode active layer, and a metal layer may be formed by this lithium. The metal layer may be composed of primarily lithium forming a solid solution in a lithium-philic material (i.e., a lithium-philic material-Li solid solution). This phenomenon may be caused by lithium-philic materials contained in the negative electrode, for example, materials that form alloys or compounds with lithium. During discharge, lithium in the negative electrode active material layer and the metal layer can ionize and migrate to the positive electrode side while retaining the lithium-philic materials forming a solid solution. Thus, lithium can be used as a negative electrode active material in an all-solid-state battery. In addition, since the lithium-philic layer and the negative electrode active material layer simultaneously coat the metal layer, they can function as a protective layer for the metal layer and inhibit the precipitation and growth of dendritic metallic lithium. This can suppress the short circuit and capacity degradation of the all-solid-state battery, and further improve the characteristics of the all-solid-state battery. Furthermore, according to one example, the metal layer is not pre-formed, which may have the advantage of lowering the manufacturing cost of the all-solid-state battery.

The present invention provides a battery module comprising the all-solid-state battery as a unit cell, a battery pack comprising the battery module, and a device comprising the battery pack as a power source. Specific examples of such devices include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like.

### [Mode for Practicing the Invention]

Hereinafter, preferred examples of the present invention are described for the purpose of illustrating the present invention, but it will be apparent to those skilled in the art that various changes and modifications are possible within the scope of the present invention and the technical idea, and that such changes and modifications fall within the scope of the appended patent claims.

### [Example 1] Manufacturing a positive electrode for an all-solid-state battery

First, as an active material, LiNi_{0.8}Co_{0.1}Mn_{0.1}O₂ powder and lithium argyrodite-type solid electrolyte Li₆-PS₅Cl were mixed with a mixer at room temperature, and the electrolyte was coated on the surface of the positive electrode active material. Then, carbon nanofiber (CNF) and polytetrafluoroethylene (PTFE) were sequentially mixed and vigorously mixed to form an electrode dough. Next, the electrode dough was sheeted and thinned to prepare a positive electrode for an all-solid-state battery containing 85% by weight of active material, 14% by weight of solid electrolyte, 0.5% by weight of binder, and 0.5% by weight of conductive material. The tensile strength of the manufactured positive electrode was adjusted to be about 0.25 MPa.

The positive electrode used for the tensile strength test was a rectangular specimen of 3×7 cm in length and width and 150 µm in thickness, and the tensile speed was set to 5 mm/min.

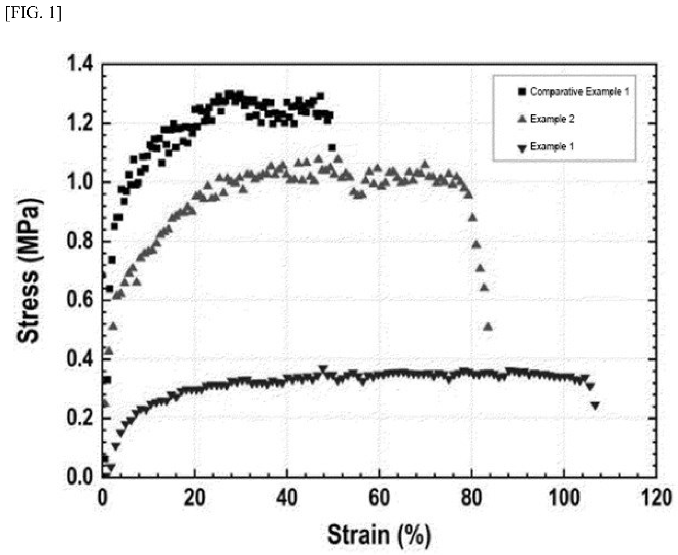

FIG. 1 is a stress-strain curve for confirming the tensile strength of the positive electrodes manufactured in the examples and comparative examples of the present invention, and indicates the extent to which the tensile strength (or stress (Mpa)) of the positive electrodes in Example 2 and Comparative Example 1 to be described later, in addition to the positive electrode of Example 1, varies in accordance with the strain (%).

### [Example 2] Manufacturing a positive electrode for an all-solid-state battery

The positive electrode for an all-solid-state battery was prepared by the same manner as Example 1, except that the tensile strength of the positive electrode was adjusted to be about 1.0 MPa.

### [Comparative Example 1] Manufacturing a positive electrode for an all-solid-state battery

The positive electrode for an all-solid-state battery was prepared by the same manner as Example 1, except that the tensile strength of the positive electrode was adjusted to be about 1.2 MPa.

### [Experimental Example 1] Evaluating the properties of the positive electrode

The electrical conductivity and ionic conductivity of the positive electrodes prepared in Examples 1, 2 and Comparative Example 1 above were measured, and the results are shown in Table 1 below.

**[Table 1]**

| | Electrical conductivity (S/cm) | Ionic conductivity (S/cm) |
|---|---|---|
| Example 1 | 1.7.E-04 | 8.3.E-05 |
| Example 2 | 2.5.E-04 | 9.5.E-05 |
| Comparative Example 1 | 1.3.E-04 | 4.1.E-05 |

As a result of measuring the electrical conductivity and ionic conductivity of the positive electrodes prepared in Examples 1, 2 and Comparative Example 1 as described above, it was found that both Examples 1 and 2, where the tensile strength of the positive electrode is within the range of 0.01 to 1.0 Mpa, exhibited significantly higher ionic conductivity than Comparative Example 1, which was outside the above range, and in the case of Example 2, the electrical conductivity was also significantly higher than Comparative Example 1.

### [Examples 3, 4 and Comparative Example 2] Manufacturing an all-solid-state battery

First, 6 g of carbon black, 2 g of Ag, 9.33 g of PVdF binder, and 7.67 g of NMP solution were placed in a Thinky mixer container and mixed 12 times at 2,000 rpm for 3 minutes each. Then, an additional 5 g of NMP solution was added and mixed 5 times at 2,000 rpm for 3 minutes each to prepare a negative electrode active material slurry, which was then applied to SUS foil and dried to prepare the negative electrode.

Then, each of the positive electrodes prepared in Examples 1, 2 and Comparative Example 1 was positioned to face the prepared negative electrode, respectively, and a sulfide-based solid electrolyte (Li₂S-P₂S₅) was positioned therebetween to fabricate an all-solid-state battery. The manufactured cell was then pressurized by an isostatic pressurization machine (Warm Isostatic Pressure) at 500 Mpa for 30 minutes.

### [Experimental Example 2] Evaluating the performance of all-solid-state batteries

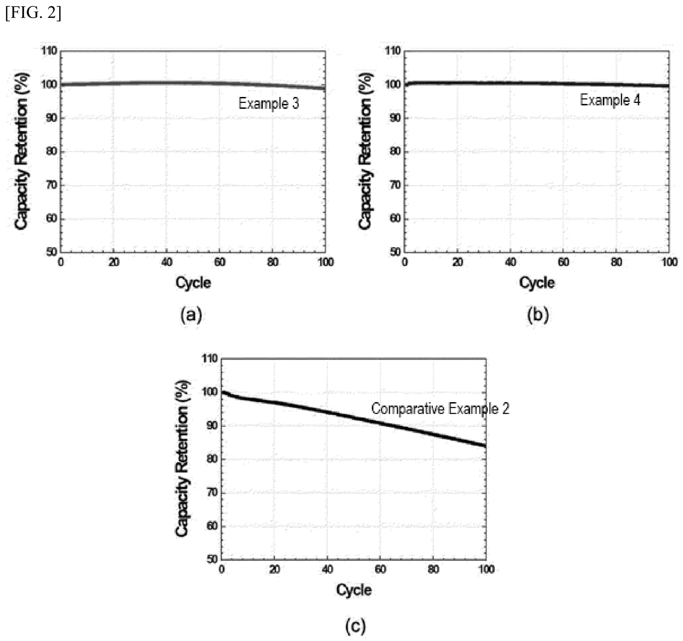

The all-solid-state batteries prepared in Examples 3, 4 and Comparative Example 2 were operated under the following charge and discharge conditions at an operating voltage range of 4.25V to 3.0V and an operating temperature of 60°C to evaluate their performance for 100 cycles, and the results are shown in FIG. 2.
- Charge conditions: 0.1C, 4.25V CC/CV, 0.05C cut-off
- Discharge conditions: 0.1C, 3.0V, CC

FIG. 2 is a graph illustrating the life characteristics and capacity retention of batteries according to examples and a comparative example of the present invention, wherein a of FIG. 2 corresponds to Example 3, b of FIG. 2 corresponds to Example 4, and c of FIG. 2 corresponds to Comparative example 2. As a result of evaluating the performance of the all-solid-state batteries prepared in Examples 3, 4 and Comparative Example 2, it was found that the batteries of Examples 3 and 4 maintained their capacity at a level close to the initial level after 100 charge and discharge cycles, while the battery of Comparative Example 2 showed a sharp degradation in capacity from the beginning of the charge and discharge. Therefore, it can be seen that even if the composition of the positive electrode is the same, if the tensile strength of the positive electrode falls outside the scope of the present invention, the object cannot be achieved.

## Claims

1. A positive electrode for an all-solid-state battery comprising a positive electrode active material, a solid electrolyte, and a binder, wherein the content of the positive electrode active material exceeds 70% by weight.

2. The positive electrode for an all-solid-state battery according to claim 1, wherein the positive electrode has a tensile strength of 0.01 to 1.0 MPa.

3. The positive electrode for an all-solid-state battery according to claim 1, wherein the content of the solid electrolyte is 0.1 to 29% by weight, and the content of the binder is 0.1 to 5% by weight, relative to the total weight of the positive electrode.

4. The positive electrode for an all-solid-state battery according to claim 1, wherein the positive electrode further comprises a conductive material.

5. The positive electrode for an all-solid-state battery according to claim 4, wherein the conductive material comprises at least one of linear particles and dot-shaped particles.

6. The positive electrode for an all-solid-state battery according to claim 5, wherein the conductive material consisting of linear particles is a carbon nanofiber or a single-walled carbon nano tube, and the conductive material consisting of dot-shaped particles is a carbon black.

7. The positive electrode for an all-solid-state battery according to claim 4, wherein the content of the conductive material is 0.001 to 5% by weight relative to the total weight of the positive electrode.

8. The positive electrode for an all-solid-state battery according to claim 1, wherein the content of the positive electrode active material is greater than 70% by weight and 95% by weight or less relative to the total weight of the positive electrode.

9. The positive electrode for an all-solid-state battery according to claim 1, wherein the solid electrolyte is a sulfide-based solid electrolyte.

10. An all-solid-state battery comprising the positive electrode for an all-solid-state battery according to claim 1; a negative electrode; and an electrolyte.

11. The all-solid-state battery according to claim 10, wherein the electrolyte is a solid electrolyte located as a layered film between the positive electrode and the negative electrode.

12. The all-solid-state battery according to claim 10, wherein the all-solid-state battery is a semi-solid-state battery comprising a liquid electrolyte.

13. The all-solid-state battery according to claim 10, wherein the all-solid-state battery is a sulfide-based all-solid-state battery.
